# EUROPEAN PATENT APPLICATION

(11) **EP 4 641 514 A1**
(43) Date of publication of application: **29.10.2025**
(21) Application number: 23905763.1
(22) Date of filing: 12.12.2023
(51) Int. Cl.: G06V 10/30, G06V 10/44

(54) **IMAGE GENERATION METHOD AND APPARATUS, COMPUTER READABLE STORAGE MEDIUM, ELECTRONIC DEVICE AND COMPUTER PROGRAM PRODUCT**

(30) Priority: 19.12.2022 CN 202211633511
(71) Applicant: Beijing Zitiao Network Technology Co., Ltd., Beijing 100190 (CN)
(72) Inventor: LIU, Wei, Beijing 100028 (CN); SUN, Shiqi, Beijing 100028 (CN)
(74) Representative: Marks & Clerk LLP
(86) International application number: PCT/CN2023/138154
(87) International publication number: WO 2024/131597

(57) **Abstract**

Provided in the present disclosure are an image generation method and apparatus, a computer readable storage medium, an electronic device and a computer program product. The method comprises: acquiring a reference image and a first noise image; acquiring a reference feature vector corresponding to the reference image; performing denoising processing on the first noise image on the basis of the reference feature vector, so as to obtain a target image which is a variation of the reference image, the target image and the reference image having partially same high-level semantic information. The embodiments of the present disclosure improve the image generation effect, and provide richer image generation paths for users.

## Description

This application claims priority to Chinese Patent Application No. 202211633511.8, filed on December 19, 2022, the disclosure of which is incorporated herein by reference in its entirety as a part of the present application.

### TECHNICAL FIELD

The present disclosure relates to an image generation method and apparatus, a computer-readable storage medium, an electronic device, and a computer program product.

### BACKGROUND

With the application and development of artificial intelligence technology in the image field, image generation technology has emerged. Currently, there is a large demand for purposeful image generation based on user needs. In the related art, the images are generally generated based on GAN, VAE, etc., but it is difficult to generate images according to the user's needs. Also, it is difficult to meet the needs of some special scenarios, which has great limitations. Therefore, there is a need for a solution capable of generating images according to the user's requirements.

### SUMMARY

The disclose provides an image generation method, an image generation apparatus, a computer-readable storage medium, electronic device and a computer program product.

According to a first aspect, an image generation method is provided, and the method includes:
acquiring a reference image and a first noise image;
acquiring a reference feature vector corresponding to the reference image; and
performing first denoising processing on the first noise image based on the reference feature vector to obtain a target image after a variation of the reference image, wherein the target image and the reference image have partially same high-level semantic information.

According to a second aspect, an image generation apparatus is provided, and the apparatus includes:
an acquisition module, configured for acquiring a reference image and a first noise image;
an extraction module, configured for acquiring a reference feature vector corresponding to the reference image; and
a processing module, configured for performing denoising processing on the first noise image based on the reference feature vector to obtain a target image after a variation of the reference image, wherein the target image and the reference image have partially same high-level semantic information.

According to a third aspect, a computer-readable storage medium storing a computer program is provided, and the computer program, when executed in a computer, causes the computer to perform the method described in any one of the first aspect.

According to a fourth aspect, an electronic device including a memory and a processor is provided, and the memory has stored therein executable code which, when executed by the processor, implements the method described in any one of the first aspect.

According to a fifth aspect, a computer program product including a computer program is provided, and the computer program, when executed by a processor, implements the method described in any one of the first aspect.

It is to be understood that both the foregoing general description and the following detailed description are exemplary and explanatory only and are not restrictive of the present disclosure.

### BRIEF DESCRIPTION OF DRAWINGS

In order to explain the technical scheme of the embodiment of the present disclosure more clearly, the drawings needed in the description of the embodiment will be briefly introduced below. Obviously, the drawings in the following description are only some embodiments recorded in this disclosure. For ordinary people in the field, other drawings can be obtained according to these drawings without paying creative labor.
Fig. 1 is a scenario diagram of an image generation according to an exemplary example of the present disclosure;
Fig. 2 is a flowchart of an image generation method according to an exemplary example of the present disclosure;
Fig. 3 is a schematic diagram of an example of an image generation according to an exemplary example of the present disclosure;
Fig. 4 is a block diagram of an image generation apparatus according to an exemplary example of the present disclosure;
Fig. 5 is a schematic block diagram of an electronic device according to some examples of the present disclosure;
Fig. 6 is a schematic structural diagram of an electronic device according to some examples of the present disclosure; and
Fig. 7 is a schematic diagram of a storage medium according to some examples of the present disclosure.

### DETAILED DESCRIPTION

In order that those skilled in the art may better understand the technical solutions of the present disclosure, the technical solutions in the examples of the present disclosure will be described clearly and completely in conjunction with the accompanying drawings in the embodiments of the application. Obviously, the described examples are only part of the examples of the present disclosure, rather than all of the examples. Based on the examples in the disclosure, all other embodiments obtained by a person skilled in the art without involving any inventive effort are within the scope of protection of the disclosure.

Where the following description refers to the accompanying drawings, like numbers in different drawings indicate the same or similar elements, unless otherwise indicated. The embodiments described in the following exemplary examples do not represent all embodiments consistent with the present disclosure. Rather, they are merely examples of apparatus and methods consistent with some aspects of the present disclosure as detailed in the appended claims.

The terminology used in the disclosure is for the purpose of describing particular embodiments only and is not intended to be limiting of the disclosure. As used in the disclosure, the singular forms "a", "an", and "the" are intended to include the plural forms as well, unless the context clearly indicates otherwise. It should also be understood that the term "and/or" as used herein refers to and encompasses any and all possible combinations of one or more of the associated listed items.

It should be understood that, although the terms first, second, etc. may be used to describe various information in the present disclosure, such information should not be limited to these terms. These terms are only used to distinguish one type of information from another. For example, the first information may also be referred to as the second information, and similarly, the second information may also be referred to as the first information, without departing from the scope of the present disclosure. Depending on the context, the word "if" as used herein may be interpreted as "as" or "when" or "in response to a determination".

With the application and development of artificial intelligence technology in the image field, image generation technology has emerged. Currently, there is a large demand for purposeful image generation based on user needs. In the related art, the images are generally generated based on GAN, VAE, etc. but it is difficult to generate images according to the user's needs. Also, it is difficult to meet the needs of some special scenes, which has great limitations. For example, when a designer creates an image work with his own style and wants to obtain a series of images with similar content, theme, and style, an ideal series of images cannot be generated based on techniques such as GAN, VAE, etc.

The present disclosure provides an image generation method, which may take a reference image input by a user as a condition for image generation, guide the generation of an image, and obtain a target image having partially the same high-level semantic information as the reference image. Therefore, the image generation effect is improved, and a richer image generation approach is provided for users.

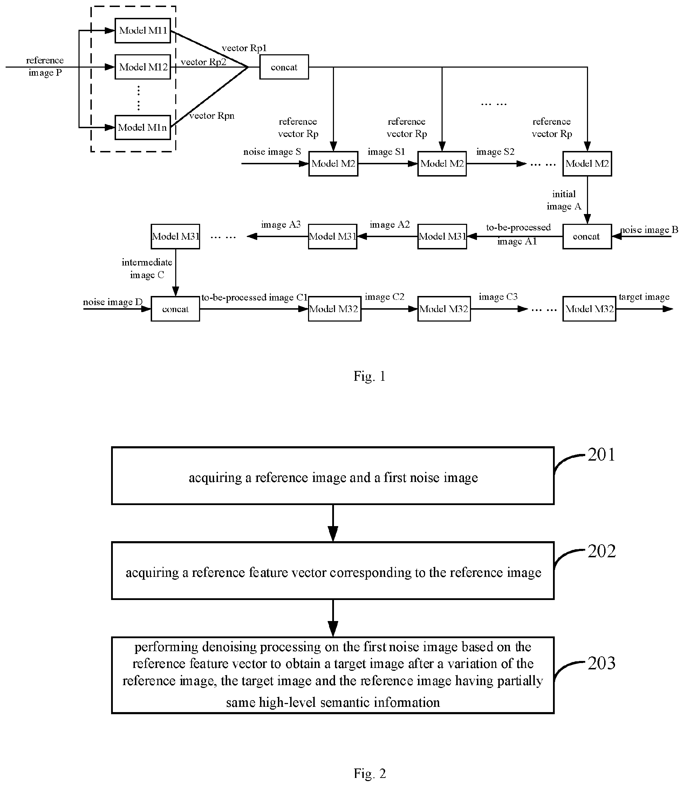

Referring to Fig. 1, is a scenario diagram of an image generation according to an exemplary example. The scheme of the present disclosure is schematically illustrated below regarding Fig. 1.

As shown in Fig. 1, first, the user may provide a reference image P as a condition for guiding image generation. The reference image P is respectively input into the model M11, model M12, ......, and model M1n so as to respectively extract a plurality of different high-level semantic feature vectors corresponding to the reference image P. The plurality of high-level semantic feature vectors may include a vector Rp1, a vector Rp2, ......, and a vector Rpn. The plurality of high-level semantic feature vectors may be stacked to obtain a reference vector Rp. It should be noted that the model M11, model M12, ......, model M1n are models of the same type but with different parameters, and these models can extract corresponding feature vectors for different high-level semantics in an image.

In addition, the noise image S is obtained, which may be a randomly generated Gaussian white noise image. The reference vector Rp and the noise image S are input together into a model M2. The model M2 may be a pre-trained diffusion model. The model M2 may perform a denoising operation on the noise image S according to the reference vector Rp to obtain an image S1. The image S1 is an image obtained by removing a small part of noise from the noise image S. Therefore, a large amount of noise is still included in the image S1. The image S1 and the reference vector Rp are input to the model M2 again. The model M2 may perform a denoising operation on the image S1 according to the reference vector Rp to obtain image S2. Similar procedures are followed and will not be described further herein. Finally, the initial image A can be obtained after the denoising processing of the plurality of models M2. The initial image A may be a lower resolution image, for example, a 64 * 64 resolution image.

Next, a noise image B is obtained, which may also be a randomly generated Gaussian white noise image. The initial image A may be up-sampled to obtain an image with a higher resolution than that of the initial image A. Then, the image obtained after up-sampling is stacked with the noise image B to obtain a to-be-processed image A1. The to-be-processed image A1 is input to a model M31. The model M31 may be a diffusion model for performing super-division processing on an image. The model M31 may perform a denoising operation on the to-be-processed image A1 to obtain an image A2. Then the image A2 is input to the model M31. The model M31 may perform a denoising operation on the image A2 to obtain the image A3. Similar procedures are followed and will not be described further herein. Finally, an intermediate image C may be obtained after the denoising processing of the plurality of models M31. The resolution of the intermediate image C is higher than the resolution of the original image A. For example, the intermediate image C may be an image with a resolution of 256 * 256.

Finally, a noise image D of randomly generated Gaussian white noise is obtained. The intermediate image C may be up-sampled to obtain an image with a higher resolution than the intermediate image C, and then the image obtained after up-sampling is stacked with the noise image D to obtain a to-be-processed image C1. The to-be-processed image C1 is input to the model M32. The model M32 may also be a diffusion model for performing super-division processing on an image. The model M32 may perform a denoising operation on the to-be-processed image C1 to obtain an image C2. Then the image C2 is input to the model M32. The model M32 may perform a denoising operation on the image C2 to obtain an image C3. Similar procedures are followed and will not be described further herein. Finally, the target image may be obtained after the denoising processing of the plurality of models M32. The resolution of the target image is higher than the resolution of the intermediate image C. For example, the target image may be an image with a resolution of 1024 * 1024.

It should be noted that the model M11, model M12, ......, model M1n, model M2, model M31, and model M32 may be trained separately, together, or roughly separately and then together. Specifically, a sample image may be acquired first, and then a matching image corresponding to the sample image may be acquired. For example, the matching image corresponding to the sample image may be drawn manually or using photo editing software. For another example, a matching image corresponding to the sample image, etc., may also be drawn by a pre-set image processing algorithm. As another example, a series of image materials may also be looked up, from which a sample image and a matching image are selected. It will be appreciated that the matching image corresponding to the sample image may also be obtained in any other reasonable manner, and the present embodiment is not limited in this respect.

Then, a multi-step noise-adding operation is performed on the sample image according to the reverse direction of the information stream shown in Fig. 1, and down-sampling is performed. After down-sampling, the multi-step noise-adding operation is performed, etc. A small amount of white Gaussian noise is added to each step of noise addition to finally obtain the sample noise image. Then the sample noise image and the sample image are input into the corresponding model to be trained according to the information flow shown in Fig. 1, and a prediction loss is calculated based on the output result. The model parameters of the model to be trained are adjusted according to the prediction loss so as to complete the training of the model.

The present disclosure will now be described in detail with reference to specific examples.

Fig. 2 is a flowchart of an image generation method according to an exemplary example. The executive body of the method may be implemented as any device, platform, server, or cluster of devices with computing or processing capabilities. The method includes the steps below.

As shown in Fig. 2, in step 201, acquiring a reference image and a first noise image.

In the present embodiment, the first noise image may be an image randomly generated by Gaussian white noise. The present embodiment is not limited to the specific manner of generating the first noise image. The reference image may be a contrast image provided by a user. The target image may be generated by comparing part of the high-level semantic information of the reference image. For example, the user may pre-create an image of a cat playing with a ball in advance and taking the image as a reference image to generate a series of variation images associated with the image of the cat playing with a ball. The poses of the cat playing with the ball in the variation images may be different.

In step 202, acquiring a reference feature vector corresponding to the reference image.

In an embodiment, a pre-trained first model may be used to extract a high-level semantic feature vector corresponding to the reference image as the reference feature vector. In another embodiment, a plurality of different high-level semantic feature vectors corresponding to the reference image may also be respectively extracted by a plurality of different first models. The plurality of different high-level semantic feature vectors are stacked to obtain the reference feature vector. Herein, the plurality of different first models may extract corresponding feature vectors for different high-level semantics in an image. In the embodiment, a plurality of different high-level semantic feature vectors corresponding to the reference image are extracted by a plurality of different first models, and the plurality of different high-level semantic feature vectors are performed concat processing, so as to improve the effect of extracting the style content of the reference image. Thus, the high-level semantics of the generated target image and the reference image have a stronger relevance.

In step 203, performing denoising processing on the first noise image based on the reference feature vector to obtain a target image after a variation of the reference image, the target image and the reference image having partially same high-level semantic information.

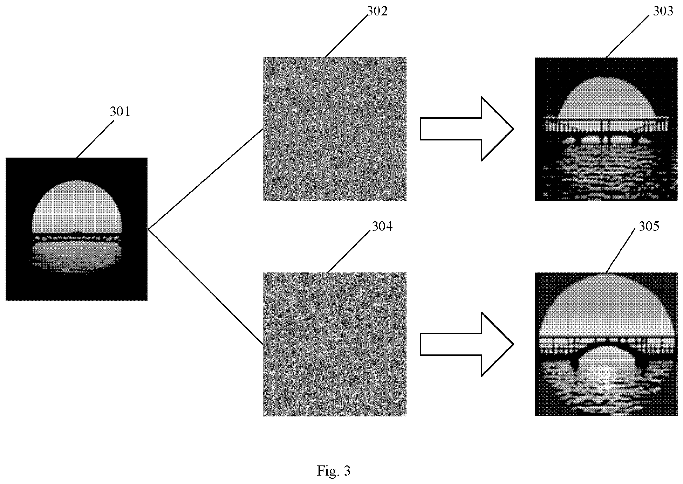

In this embodiment, the noise image may be denoised according to the high-level semantic features of the reference image based on the above-mentioned reference feature vector to obtain the target image. As shown in Fig. 3, the reference image 301 may be a material image that is provided by a user, the image content is specifically a bridge on the river. Different target images may be obtained by denoising different noise images according to the reference image 301. For example, a target image 303 may be obtained by denoising the noise image 302 according to the reference image 301. A target image 305 may be obtained by denoising the noise image 304 according to the reference image 301. The noise image 302 and the noise image 304 are both randomly generated Gaussian white noise.

Specifically, in an embodiment, a machine learning model or a preset algorithm may be used to perform a denoising processing on a first noise image based on a reference feature vector so as to obtain a target image. In another embodiment, the target image may also be obtained by denoising the first noise image by a plurality of denoising operations using a pre-trained second model based on the reference feature vector, and the second model may be a diffusion model.

In yet another embodiment, performing, by the second model, a plurality of denoising operations based on the reference feature vector to denoise the first noise image to obtain an initial image with a lower resolution. Then, the super-resolution processing is performed on the initial image by at least one third model to obtain a target image with a higher resolution, wherein the third model may also be a diffusion model.

Specifically, in an aspect, any denoising operation of the plurality of denoising operations may include: firstly, determining a to-be-denoised image, and in response to the any denoising operation is a first one that is performed among the plurality of denoising operations, the to-be-denoised image is the first noise image, and in response to the any denoising operation is not the first one that is performed among the plurality of denoising operations, the to-be-denoised image is a processing result of a previous denoising operation among the plurality of denoising operations.

Then determining a timing vector corresponding to the any denoising operation, and denoising, by the second model, the to-be-denoised image based on the reference feature vector and the timing vector. Herein, the timing vector may be a vector capable of representing the timing of the any denoising operation of the plurality of denoising operations. For example, if the any denoising operation is an n-th denoising operation in the plurality of denoising operations, the timing vector corresponding to the denoising operation is a vector capable of representing the n-th denoising operation.

Specifically, merging (e.g., adding) the reference feature vector and the timing vector to obtain a condition vector, and performing denoising processing on the to-be-denoised image according to the condition vector by means of the second model. It should be noted that, in addition to the reference feature vector, other feature vectors and the reference feature vector may be merged together with the timing vector to obtain a condition vector, and the present embodiment is not limited in this respect. The second model may include a plurality of network layers, the plurality of network layers includes at least one first network layer. The condition vector and a hidden variable output by each first network layer are fused by a cross-attention mechanism, and inputting fused vectors obtained after fusion to at least one network layers after the at least one first network layer, respectively. The first network layer may be any one or more of the plurality of network layers. In this example, the condition vector is fused with the hidden variable output by the network layer by using the cross-attention mechanism, which not only improves the ability of the second model to generate images, but also reduces the consumption of computing resources and improves the efficiency of image generation.

On the other hand, the initial image may be performed with a super-resolution processing using at least one third model by the manners below. Firstly, obtaining a second noise image, up-sampling the initial image, and performing concat processing on the image obtained after the up-sampling processing and the second noise image to obtain a to-be-processed image. Herein, the number of channels of the to-be-processed image is the sum of the number of channels of the image obtained after the up-sampling processing and the second noise image. For example, the number of channels of the image obtained after the up-sampling processing is 3, the number of channels of the second noise image is 3, and the number of channels of the to-be-processed image is 6.

Then, performing denoising processing on the to-be-processed image by the at least one third model to obtain the target image. Specifically, performing, by one third model, a plurality of denoising processing to obtain an intermediate image, the resolution of the intermediate image is higher than that of the initial image. Up-sampling the intermediate image to obtain an up-sampled image, and performing concat processing on the up-sampled image and the third noise image. Then, performing, by another third model, a plurality of denoising processing on the image obtained after the concat processing, so as to obtain the target image with higher resolution than that of the intermediate image.

It should be noted that any one of the third models includes an encoder and a decoder, the encoder comprises a plurality of convolution layers, and the decoder comprises a plurality of convolution layers. In the process of performing denoising processing by using the third model, it is necessary to perform a down-sampling operation on the feature image using the encoder, perform convolution operation on the feature image by convolution layers included in the encoder, perform up-sampling operation on the feature image by the decoder, and perform convolution operation on the feature image by convolution layers included in the decoder. In the process of processing the feature image by the encoder, the down-sampling operation may be performed first, and then the convolution operation may be performed. In the process of processing the feature image by the decoder, the convolution operation may be performed before the up-sampling operation. This can reduce the amount of calculation in the convolution operation, reduce the consumption of computational resources, and improve the efficiency of image generation.

In addition, any one of the third models may include a plurality of residual blocks, and higher-resolution feature image may be processed by a smaller number of residual blocks, and lower-resolution feature images may be processed by a larger number of residual blocks, thereby reducing the consumption of computational resources.

For example, a specific application scenario may require a large amount of image materials to be referenced when creating graphic designs or placing advertisements. The user may provide a reference image selected or created in advance, and then generate a series of material images with similar contents, subjects, and styles around the reference image, so as to enrich the material images.

Another specific application scenario may be that an author may first create an image work and then use the solution provided by the present disclosure to generate a series of related images similar to the original authored content, theme, and style. The author may choose part of the images for re-creation, so as to obtain better works.

The example is not limited to the above-described application scenario but may be applied to other scenarios. The present disclosure provides an image generation method, including, by acquiring a reference image and a first noise image, acquiring a reference feature vector corresponding to the reference image, generating a target image based on the reference feature vector and the first noise image, and the target image and the reference image have partially the same high-level features. Since the present embodiment takes a reference image input by a user as a condition for image generation, it guides the generation of the image to obtain a target image with partially the same high-level semantic information as the reference image, thereby improving the image generation effect and providing a richer image generation approach for the user.

It should be noted that while in the embodiments described above, the operations of the methods of embodiments of the present disclosure have been described in a particular order, this does not require or imply that the operations must be performed in the particular order, or that all illustrated operations must be performed, to achieve the desired results. Rather, the steps depicted in the flowcharts may change order of execution. Additionally, or alternatively, some steps may be omitted, multiple steps combined into one step for execution, and/or one step decomposed into a plurality of steps for execution.

Corresponding to the foregoing image generation method examples, the present disclosure also provides examples of the image generation apparatus.

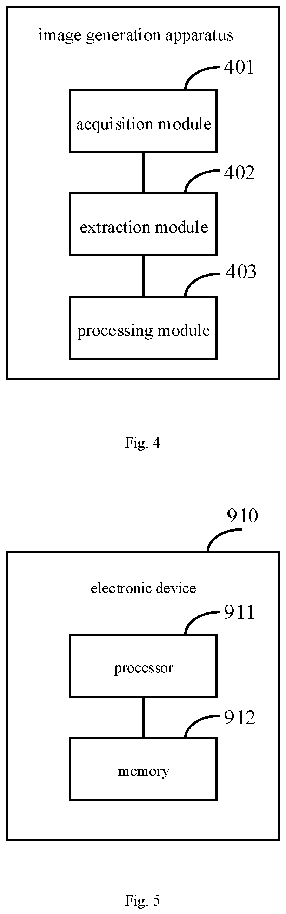

As shown in Fig. 4, it is a block diagram of an image generation apparatus according to an exemplary example of the present disclosure. The apparatus may include an acquisition module 401, an extraction module 402, and a processing module 403.

Herein, the acquisition module 401 is configured for acquiring a reference image and a first noise image.

The extraction module is configured for acquiring a reference feature vector corresponding to the reference image.

The processing module 403 is configured for performing denoising processing on the first noise image based on the reference feature vector to obtain a target image after a variation of the reference image, wherein the target image and the reference image have partially same high-level semantic information.

In some embodiments, the extraction module 402 may include an extraction sub-module and a concat sub-module (not shown in the figure).

The extraction sub-module is configured for acquiring a plurality of different high-level semantic feature vectors corresponding to the reference image by a plurality of different first models.

The concat sub-module is configured for performing concat processing on the plurality of different high-level semantic feature vectors to obtain the reference feature vector.

In other embodiments, the processing module 403 may include a processing sub-module and a super-resolution sub-module (not shown in the figure).

Herein, the processing sub-module is configured for performing a plurality of denoising operations by a second model based on the reference feature vector and the first noise image, to denoise the first noise image to obtain the initial image.

The super-resolution sub-module is configured for performing super-resolution processing on the initial image by at least one third model to obtain the target image, and the resolution of the target image is higher than the resolution of the initial image.

In other embodiments, the processing sub-module may perform any denoising operation of the plurality of denoising operations by the second model by the steps of: determining a to-be-denoised image, wherein in response to the any denoising operation is a first one that is performed among the plurality of denoising operations, the to-be-denoised image is the first noise image, and in response to the any denoising operation is not the first one that is performed among the plurality of denoising operations, the to-be-denoised image is a processing result of a previous denoising operation among the plurality of denoising operations; determining a timing vector corresponding to the any denoising operation; and denoising, by the second model, the to-be-denoised image based on the reference feature vector and the timing vector.

In other embodiments, the processing sub-module may denoise, by the second model, the to-be-denoised image based on the reference feature vector and the timing vector, by following steps: obtaining a condition vector based on at least the reference feature vector and the timing vector, and denoising the to-be-denoised image according to the condition vector by the second model.

In other embodiments, the second model includes a plurality of network layers, and the plurality of network layers comprises at least one first network layer. The processing sub-module may denoise the to-be-denoised image according to the condition vector by using the second model, by following steps: fusing, by a cross-attention mechanism, the condition vector and a hidden variable output by each first network layer, and inputting fused vectors obtained after fusion to at least one network layer after the at least one first network layer, respectively.

In other embodiments, the super-resolution module is configured for acquiring a second noise image, and up-sampling the initial image and performing concat processing on an unsampled initial image with the second noise image to obtain a to-be-processed image; and performing denoising processing on the to-be-processed image by the at least one third model to obtain the target image.

In other embodiments, any one of the third models includes an encoder and a decoder, the encoder comprises a plurality of convolution layers, and the decoder comprises a plurality of convolution layers. Herein, the denoising process using the third model includes: performing down-sampling operation before a convolution operation, and the first convolution operation is performed by the plurality of convolution layers included in the encoder; and performing up-sampling operation after a convolution operation, and the convolution operation is performed by the plurality of convolution layers comprised in the decoder.

With respect to the apparatus examples, since they basically correspond to method examples, the relevant points can be referred to part of the description of method examples. The device examples described above are merely illustrative, in which the elements illustrated as separate elements may or may not be physically separate, and the components shown as elements may or may not be physical elements, i.e., may be located at one place, or may be distributed across multiple network elements. Some or all of the modules may be selected according to actual needs to achieve the purpose of the solution of the example of the present disclosure. A person of ordinary skill in the art would understand and practice without involving any inventive effort.

Fig. 5 is a schematic block diagram of an electronic device according to an embodiment of the present disclosure. As shown in Fig. 5, the electronic device 910 includes a processor 911 and a memory 912 that may be used to implement a client or server. The memory 912 is operative to store non-transitory computer-executable instructions (e.g., one or more computer program modules). The processor 911 is configured for executing the computer-executable instructions that, when executed by the processor 911, may perform one or more of the above-described image generation methods to implement the above-described image generation methods. The memory 912 and the processor 911 may be interconnected by a bus system and/or other form of connection mechanism (not shown).

For example, the processor 911 may be a central processing unit (CPU), a graphics processing unit (GPU), or other forms of processing unit having data processing capabilities and/or program execution capabilities. For example, the central processing unit (CPU) may be an X86 or ARM architecture or the like. The processor 911 may be a general-purpose or special-purpose processor that may control other components in the electronic device 910 to perform desired functions.

For example, the memory 912 may include any combination of one or more computer program products, which may include various forms of computer-readable storage media, such as volatile memory and/or non-volatile memory. The volatile memory may for example include a random-access memory (RAM) and/or a cache storage (cache) etc. Non-volatile memory may include, for example, a read-only memory (ROM), a hard disk, an erasable programmable read-only memory (EPROM), a portable compact disc read-only memory (CD-ROM), USB memory, flash memory, etc. One or more computer program modules may be stored on the computer-readable storage medium and executed by the processor 911 to perform various functions of the electronic device 910. Various applications and various data may also be stored in the computer-readable storage medium, as well as various data used and/or generated by the applications.

It should be noted that, in the examples of the present disclosure, the specific functions and technical effects of the electronic device 910 may be referred to the above description regarding the image generation method and will not be described in detail herein.

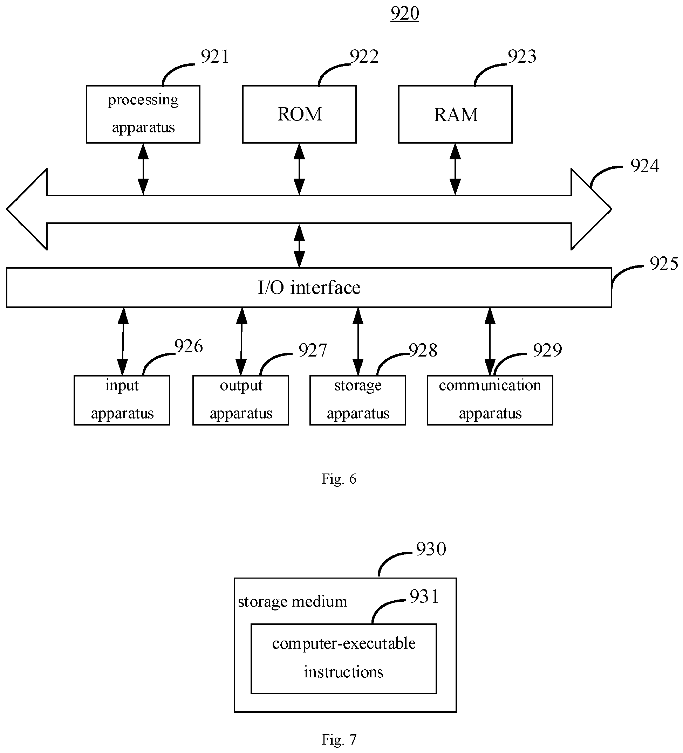

Fig. 6 is a schematic block diagram of another electronic device according to an example of the present disclosure. The electronic device 920 is, for example, adapted to implement the image generation method provided by examples of the present disclosure. The electronic device 920 may be a terminal device or the like and may be used to implement a client or server. The electronic device may include, but are not limited to, mobile terminals such as mobile phones, notebook computers, digital broadcast receivers, PDA (personal digital assistants), PAD (tablet computers), PMP (portable multimedia players), vehicle terminals (e.g., vehicle navigation terminals), etc. and fixed terminals such as ones of digital TVs, desktop computers, etc. It should be noted that the electronic device 920 shown in Fig. 6 is only one example and would not impose any limitation on the functionality and scope of use of embodiments of the present disclosure.

As shown in Fig. 6, the electronic device 920 may include a processing apparatus (e.g., a central processing unit, a graphics processor, etc.) 921 that may perform various suitable actions and processes in accordance with a program stored in a read-only memory (ROM) 922 or a program loaded from the storage apparatus 928 into a random access memory (RAM) 923. Various programs and data required for the operation of the electronic device 920 can also be stored in the RAM 923. The processing apparatuses 921, ROM 922, and RAM 923 are connected to each other via bus 924. An input/output (I/O) interface 925 is also connected to the bus 924.

In general, the following devices may be connected to an I/O interface 925: an input apparatus 926 including, for example, a touch screen, a touchpad, a keyboard, a mouse, a camera, a microphone, an accelerometer, a gyroscope, etc.; an output apparatus 927 including, for example, a liquid crystal display (LCD), a speaker, a vibrator, etc.; a storage apparatus 928 including, for example, a magnetic tape, a hard disk, etc.; and a communication apparatus 929. The communication apparatus 929 may allow the electronic device 920 to communicate wirelessly or wired with other electronic devices to exchange data. Although Fig. 6 illustrates an electronic device 920 with various means, it should be understood that not all illustrated means are required to be implemented or provided and that the electronic device 920 may alternatively be implemented or provided with more or fewer means.

For example, according to an example of the present disclosure, the above-described image generation method may be implemented as a computer software program. For example, embodiments of the present disclosure include a computer program product including a computer program embodied on a non-transitory computer-readable medium, and the computer program including program code for performing the image generation method. In such embodiments, the computer program may be downloaded and installed from a network via the communication apparatus 929, or from the storage apparatus 928, or from the ROM 922. The computer program, when executed by the processing apparatus 921, performs the functions defined above in the method of embodiments of the present disclosure.

Fig. 7 is a schematic diagram of a storage medium according to some examples of the present disclosure. For example, as shown in Fig. 7, the storage medium 930 may be a non-transitory computer-readable storage medium for storing non-transitory computer-executable instructions 931. The image generation method of embodiments of the present disclosure may be implemented when the non-transitory computer-executable instructions 931 are executed by a processor, e.g., one or more steps according to the image generation method described above may be performed when the non-transitory computer-executable instructions 931 are executed by a processor.

For example, the storage medium 930 may be applied in the electronic device described above, e.g., the storage medium 930 may include a memory in the electronic device.

For example, the storage medium may include a memory card of a smartphone, a storage component of a tablet computer, a hard disk of a personal computer, random access memory (RAM), a read-only memory (ROM), an erasable programmable read-only memory (EPROM), a portable compact disc read-only memory (CD-ROM), a flash memory, or any combination of the above, as well as other suitable storage media.

For example, the description of the storage medium 930 may refer to the description of the memory in an example of the electronic device and will not be repeated. The specific functions and technical effects of the storage medium 930 can be referred to the above description regarding the image generation method and will not be described in detail herein.

It should be noted that, in the context of this disclosure, a computer-readable medium can be a tangible medium that may contain or store a program for use by or in connection with an instruction execution system, device, or apparatus. The computer-readable medium described above in the present disclosure can be either a computer-readable signal medium or a computer-readable storage medium or any combination thereof. The readable storage medium may include, for example, but not limited to, electronic, magnetic, optical, electromagnetic, infrared, or semiconductor systems, apparatuses, devices, or any combination thereof. More specific examples of computer-readable storage media may include but are not limited to an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this disclosure, a computer-readable storage medium may be any tangible medium that can contain or store a program that can be used by or in connection with an instruction execution system, apparatus, or device. In this disclosure, the computer-readable signal medium may include a data signal embodied in baseband or propagated as part of a carrier wave carrying computer-readable program code. Such propagated data signals may take many forms, including but not limited to electromagnetic signals, optical signals, or any suitable combination of the preceding. The computer-readable signal medium can also be any computer-readable medium other than a computer-readable storage medium that can send, propagate, or transport the program for use by or in connection with the instruction execution system, apparatus, or device. The program code embodied on the computer-readable medium may be transmitted over any suitable medium including, but not limited to, wire, fiber optic cable, RF (radio frequency), and the like, or any suitable combination of the foregoing.

Other embodiments of the disclosure will be apparent to those skilled in the art from consideration of the disclosure herein. The disclosure is intended to cover any variations, uses, or adaptations of the disclosure following the general principles of the disclosure and including common knowledge or customary technical means in the art that are not disclosed in the present disclosure. It is intended that the description and the examples be considered as exemplary only, with a true scope and spirit of the disclosure being indicated by the claims.

It should be understood that the present disclosure is not limited to the precise structures described above and shown in the accompanying drawings and that various modifications and changes may be made without departing from the scope thereof. The scope of the present disclosure is limited only by the appended claims.

## Claims

1. An image generation method, comprising:
acquiring a reference image and a first noise image;
acquiring a reference feature vector corresponding to the reference image; and
performing denoising processing on the first noise image based on the reference feature vector to obtain a target image after a variation of the reference image, wherein the target image and the reference image have partially same high-level semantic information.

2. The method according to claim 1, wherein the acquiring a reference feature vector corresponding to the reference image, comprises:
acquiring a plurality of different high-level semantic feature vectors corresponding to the reference image by a plurality of different first models; and
performing concat processing on the plurality of different high-level semantic feature vectors to obtain the reference feature vector.

3. The method according to claim 1 or 2, wherein the performing denoising processing on the first noise image based on the reference feature vector to obtain a target image after a variation of the reference image, comprises:
based on the reference feature vector, performing a plurality of denoising operations by a second model to obtain an initial image; and
performing a super-resolution processing on the initial image by at least one third model to obtain the target image, wherein a resolution of the target image is higher than a resolution of the initial image.

4. The method according to claim 3, wherein any denoising operation of the plurality of denoising operations comprises:
determining a to-be-denoised image, wherein in response to the any denoising operation is a first one that is performed among the plurality of denoising operations, the to-be-denoised image is the first noise image, and in response to the any denoising operation is not the first one that is performed among the plurality of denoising operations, the to-be-denoised image is a processing result of a previous denoising operation among the plurality of denoising operations;
determining a timing vector corresponding to the any denoising operation; and
denoising, by the second model, the to-be-denoised image based on the reference feature vector and the timing vector.

5. The method according to claim 4, wherein the denoising, by the second model, the to-be-denoised image based on the reference feature vector and the timing vector, comprises:
obtaining a condition vector based on at least the reference feature vector and the timing vector; and
denoising the to-be-denoised image according to the condition vector by using the second model.

6. The method according to claim 5, wherein the second model comprises a plurality of network layers, and the plurality of network layers comprises at least one first network layer;
wherein the denoising the to-be-denoised image according to the condition vector by using the second model, comprises:
fusing, by a cross-attention mechanism, the condition vector and a hidden variable output by each first network layer, and
inputting fused vectors obtained after fusion to a network layer after the at least one first network layer, respectively.

7. The method according to any one of claims 3-6, wherein the performing a super-resolution processing on the initial image by at least one third model to obtain the target image, comprises:
acquiring a second noise image;
up-sampling the initial image and performing concat processing on an unsampled initial image with the second noise image to obtain a to-be-processed image; and
performing denoising processing on the to-be-processed image by the at least one third model to obtain the target image.

8. The method according to claim 7, wherein any third model comprises an encoder and a decoder, the encoder comprises a plurality of convolution layers, and the decoder comprises a plurality of convolution layers;
wherein performing denoising processing on the to-be-processed image by the any third model, comprises:
performing down-sampling operation before a convolution operation, wherein the convolution operation is performed by the plurality of convolution layers comprised in the encoder; and
performing up-sampling operation after a convolution operation, wherein the convolution operation is performed by the plurality of convolution layers comprised in the decoder.

9. An image generation apparatus, comprising:
an acquisition module, configured for acquiring a reference image and a first noise image;
an extraction module, configured for acquiring a reference feature vector corresponding to the reference image; and
a processing module, configured for performing denoising processing on the first noise image based on the reference feature vector to obtain a target image after a variation of the reference image, wherein the target image and the reference image have partially same high-level semantic information.

10. A computer-readable storage medium storing a computer program, wherein the computer program, when executed in a computer, causes the computer to perform the method according to any one of claims 1-8.

11. An electronic device comprising a memory and a processor, wherein the memory has stored therein executable code which, when executed by the processor, implements the method according to any one of claims 1-8.

12. A computer program product comprising a computer program which, when executed by a processor, implements the method according to any one of claims 1-8.
